# EUROPEAN PATENT APPLICATION

(11) **EP 4 491 566 A1**
(43) Date of publication of application: **15.01.2025**
(21) Application number: 24187411.4
(22) Date of filing: 09.07.2024
(51) Int. Cl.: B66C 1/28, B65G 47/00, B66C 1/62, B66C 17/04

(54) **A HANDLING HANGING CLAW ASSEMBLY AND PIPELINE HANDLING EQUIPMENT**

(30) Priority: 11.07.2023 CN 202321806306 U
(71) Applicant: Nordic Gravity Energy Storage Technology Oy, 02240 Espoo (FI)
(72) Inventor: WANG, Lianping, Shanghai, 201315 (CN); HU, Yuguang, Shanghai, 201315 (CN); TANG, Xiaoming, Shanghai, 201315 (CN)
(74) Representative: Kolster Oy Ab

(57) **Abstract**

A handling hanging claw assembly, comprising a plurality of hanging claw main bodies (1), which are connected with corresponding movable ends, so that the item to be transported is restricted between the corresponding hanging claw main bodies;

Each hanging claw main body is floatingly provided with a plurality of floating claws (2), and a resetting structure is arranged between the floating claws (2) and the hanging claw main body for providing resilience.

In the first state, the hanging claw main bodies distributed on both sides of the item to be transported is moved in a first direction towards the item to be transported, so that part of the floating claws are displaced by a pressure of the item to be transported in the first direction of the movement, and the remaining floating claws form an enclosure partially on aside wall of the item to be transported, so as to limit the displacement of the item to be transported.

In the second state, the hanging claw main bodies distributed on both sides of the item to be transported is moved away from the item to be transported in a second direction, so that part of the floating claws rebound in the second direction of movement and return to the initial state, so that the hanging claw main body is relieved of the restriction relative to the item to be transported.

## Description

### TECHNICAL FIELD

The present application relates to the technical field of handling, and more particularly to a handling hanging claw assembly and pipeline handling equipment.

### BACKGROUND

At present, when handling items in some construction sites, warehouses or factories, hooks are usually used to secure the items and then move the items to the designated location. This handling method is to use hooks to get stuck in the gap of the items to achieve the purpose of limiting the displacement of the items, so it is also limited by the outline of the items, shape and other factors, and cannot be used in many scenarios. And in some cases, handling multiple items need to be bundled in advance to make the subsequent handling process more convenient, and the cost of pre-bundling machinery and equipment is generally higher, and the staff needs to follow and participate in pre-bundling which makes the work efficiency very low.

In summary, there is a need to solve the problems in the prior art.

### SUMMARY OF THE INVENTION

To solve the above technical problems, the purpose of this application is to provide a kind of handling hanging claw assembly and pipeline handling equipment, which is not easy to be limited by the shape or outline of the item when handling the item, and the design of the hanging claw is very ingenious, not easy to be affected by the number of items to be moved, and can handle multiple items at a time.

In order to achieve the above purposes, the application provides a handling hanging claw assembly, comprising a plurality of hanging claw main bodies, which are connected with the corresponding movable ends, and the plurality of hanging claw main bodies can move with the movable ends, so that the item to be transported is restricted between the corresponding hanging claw main bodies; Each hanging claw main body is floatingly provided with a plurality of floating claws, and a resetting structure is arranged between the floating claws and the hanging claw main body for providing resilience;

In the first state, the hanging claw main bodies are distributed on both sides of the item to be transported is moved in a first direction towards the item to be transported, so that part of the floating claws are displaced by the pressure of the item to be transported in the first direction of the movement, and the remaining floating claws form an enclosure partially on the side wall of the item to be transported, so as to limit the displacement of the item to be transported, and is used for grabbing the item to be transported;

In the second state, the hanging claw main bodies distributed on both sides of the item to be transported is moved away from the item to be transported in a direction, so that part of the floating claws rebound in the second direction of movement and return to the initial state, so that the hanging claw main bodies are relieved of the restriction relative to the item to be transported and is used to release the item to be transported.

It should be noted that the floating claw set here has good compatibility for the items to be transported, when grasping the items to be transported, the hanging claw main bodies clamp both sides of the items to be transported, the floating claws will retract under pressure, and the other floating claws will enclose the side wall of the items to be transported. In this case, it does not matter whether there is a gap for the items to be transported. The hanging claw main body can grasp it, and through the enclosure to ensure the fixed stability, while ensuring that the handling of the hanging claw assembly and the items to be transported are not easily worn or damaged.

In some embodiments, a plurality of the floating claws includes a plurality of first floating claws and a plurality of second floating claws, and the cross-sectional area of the first floating claw is greater than the cross-sectional area of the second floating claw.

It is understandable that the first floating claw and the second floating claw here are differentiated into large size and small size, and different sizes can correspond to match different types or outlines of the items to be transported, with more pertinent, so that in the process of grabbing, the floating claw is more fit to the outline of the items to be transported, making the enclosure tighter.

In some embodiments, a plurality of the first floating claws and a plurality of the second floating claws are configured as cylinders, and the end faces of the cylinders are flush when the item to be transported does not exert pressure on the floating claws.

Here, since the outline of the cylinder is relatively smooth and continuous, it is not easy to cause scratches and friction to the items to be transported, thus ensuring the integrity of the appearance of the items to be transported.

In some embodiments, a magnetic generating device is also arranged, and a plurality of the hanging claw main bodies are electrically connected with magnetic generating devices, wherein at least part of the item to be transported is made of metal,

When the magnetic generating device is started, the floating claw generates an attractive force relative to the item to be transported and is used to retain and secure the item to be transported.

It should be noted that the magnetic generating device can improve the retention and securing effect of the hanging claw main body for the items to be transported, which can improve the grasping ability of the hanging claw assembly for the metal items to be transported, and ensure the stability of the grasping and handling process.

In some embodiments, the magnetic generating device is an electromagnet, and the electromagnet comprises a plurality of output terminals, and the number of output terminals corresponds to the number of floating claws.

In some embodiments, the resetting structure comprises a spring, a first accommodating groove arranged on the inner circumference of the floating claw, and a second accommodating groove arranged on the hanging claw main body, and the spring is simultaneously arranged in the first accommodating groove and the second accommodating groove to be connected with the floating claw and the hanging claw main body respectively, and the depth of the second accommodating groove is not less than the length of the floating claw, so that the floating claw can completely enter the second accommodating groove.

Wherein, the retractable effect of the floating claw is achieved through the spring set and the accommodating groove matching with the spring. When grasping the items to be transported, part of the floating claws are compressed and retracted, so that the rest of floating claws can realize the enclosure for the items to be transported and achieve the effect of fixed limit. When putting down the items to be transported, the hanging claw main bodies move away from the items to be transported, so that the pressure on the floating claw is gradually reduced, then spring can also gradually rebound and make the floating claw to extend.

On the other hand, the present application also provides a pipeline handling equipment, comprising: the above-mentioned a kind of handling hanging claw assembly and a base frame, wherein the movable end is configured as a movable vehicle group, and the movable vehicle group is used to drive the claw body to move transversely or longitudinally; the base frame is used to provide support for the movable vehicle group.

It should be noted that multiple pipelines can be transported at the same time through a number of symmetrically arranged hanging claw main bodies, avoiding the situation that some pipeline handling equipment can only move one pipeline at a time, improving work efficiency, and at the same time, the pipeline is moved by the movable vehicle set, so that the pipeline can quickly and safely reach the designated location.

In some embodiments, the movable vehicle group comprises a trolley and a telescopic arm connected with the trolley, and the other end of the telescopic arm is fixedly connected with the hanging claw main body; the wheel of the trolley is connected with the base frame so that the trolley can move along the longitudinal direction of the base frame; the bottom of the base frame is provided with an opening to make the telescopic arm pass through the opening, and drive the hanging claw main body to move in the extension or contraction direction of the telescopic arm, for adjusting the position of the pipeline.

It is worth mentioning that the trolley and the telescopic arm can be used together to achieve the transverse and longitudinal displacement of the transported pipeline, and when grasping the pipeline, it can also achieve a more accurate grasp of the pipeline by adjusting the position of the trolley and the length of the telescopic arm, ensuring the overall reliability.

In some embodiments, the number of the hanging claw main bodies is four, and the four hanging claw main bodies are symmetrically arranged in pairs, and the four hanging claw main bodies are correspondingly arranged with four trolleys, and the adjacent trolleys have detachable connection so that the trolleys can be used independently or in combination.

It is understandable that the increase in the number of the hanging claw main body can make the grasping area of the floating claw for pipelines increase, then the pipeline handling equipment can transport more quantities of pipelines at the same time to achieve the high-efficiency handling work, the working time is saved, and the detachable connection between the trolley can make the handling operation more flexible, and the state of the handling hanging claw assembly needs to be adjusted can have a timely response.

In some embodiments, the base frame is configured as a gantry crane, and the movable vehicle group co-operates with the main beam of the gantry crane so that the movable vehicle group moves laterally along the longitudinal direction of the main beam.

The gantry crane here can provide excellent support for the handling hanging claw assembly, and can be used in indoor factories or in open-air cargo yards, etc., with strong compatibility.

Compared with the prior art, the application provides a handling hanging claw assembly and pipeline handling equipment with the following beneficial effects:
1. The application provides a kind of handling hanging claw assembly, which is provided with a plurality of hanging claw main bodies and floating claws on the hanging claw main body, so that when grabbing or placing the item to be transported, the fixed situation relative to the item to be transported is adjusted by the floating claw in different telescopic states, and the handling is not limited by the shape conditions of the item to be transported, and has good compatibility; And it can transport a plurality of items to be transported at the same time through the combined use of a plurality of claw bodies, which greatly improves the work efficiency and saves the cost of manpower and time.
2. The application provides a kind of handling hanging claw assembly, the floating claw comprises a first floating claw and a second floating claw, and the dimensions of the two are different, so that in the handling of different items to be transported more targeted, and the coordination between the items to be transported will be more closely.
3. The application provides a kind of handling hanging claw assembly, and also arranges a magnetic generating device, which can have a better grasping capacity for the item to be transported of metal material, so as to improve the safety and stability during handling.
4. The pipeline handling equipment provided in this application uses the above hanging claw assembly to improve the efficiency of the pipeline handling, and adjusts the position of the pipeline through the movable vehicle group, so that the grasping and placing process of the pipeline can be very accurate.
5. The pipeline handling equipment provided in this application is equipped with a trolley and a telescopic arm that can be moved transversely or longitudinally to adjust the target position in the process of transporting the pipeline, and the adjacent trolley can be separated or combined to operate, with higher operability.

### BRIEF DESCRIPTION OF THE DRAWINGS

The above-mentioned features, technical features, advantages and the methods of their implementation of the present application are further described below in a clear and understandable manner, in combination with the description of the drawings and the preferred embodiment.
FIG.1 shows a overall structural schematic view in one embodiment of the present application;
FIG.2 shows a structural schematic view of the hanging claw main body in one embodiment of this application;
FIG.3 shows a detailed view of a floating claw in one embodiment of the present application;
FIG.4 shows a structural schematic view in one embodiment of this application.

Attached figure icon numbers description: hanging claw main body 1; floating claw 2; first floating claw 21; second floating claw 22; controllable electromagnet 3; spring 4; trolley 5; telescopic arm 6; main beam 71; end beam 72.

### DETAILED DESCRIPTION

To explain the embodiments of the present application or the technical solutions in the prior art more clearly, the specific implementations of the present application will be described below by referring to the drawings. The drawings in the following description show merely some embodiments of the present application, and other drawings and other implementations may be derived from these drawings by those of ordinary skill in the art without creative efforts.

To keep the drawings concise, only components related to the present application are schematically illustrated in each drawing, which does not represent its actual structure as a product. Further, for a better understanding, only one of the components having the same structure or function is schematically shown or marked in some drawings. Hereof, "one" not only means "only one", but also "more than one".

It should also be further understood that the term "and/or" as used in the description of the present application and the accompanying claims refers to any combination of one or more of the associated listed items and all possible combinations, and includes these combinations.

In the description of the present invention, it should be noted that, unless otherwise definitely specified and limited, the terms "mounted", "connected with each other", and "connected to/with" need to be broadly understood, for example, connection may be fixed connection, or detachable connection or integrated connection; or may be mechanical connection or electric connection; or may be direct connection, or indirect connection via an intermediation, or communication of inner parts of two elements. A person of ordinary skill in the art can understand the specific meaning of the above terms in the present application in accordance with specific conditions.

In the description of the application, it is necessary to understand that the terms "center", "longitudinal", "transverse", "length", "width", "thickness", "up", "down", "front", "back", "left", "right", "vertical", "horizontal", "top", "bottom", "inner", "outside", "clockwise", "counterclockwise", "axial", "radial", "circumferential", etc., indicate orientations or positional relationships based on the orientations or positional relationships shown in the drawings and are for the convenience of description and simplification of the description only, rather than indicating or implying that the device or element referred to must have a particular orientation, be constructed and operated in a particular orientation, and therefore cannot be construed as a limitation on the present application.

Furthermore, in the description of the present application, the terms "first" and "second" are used for a distinguishing description only and are not to be construed as indicating or implying relative importance.

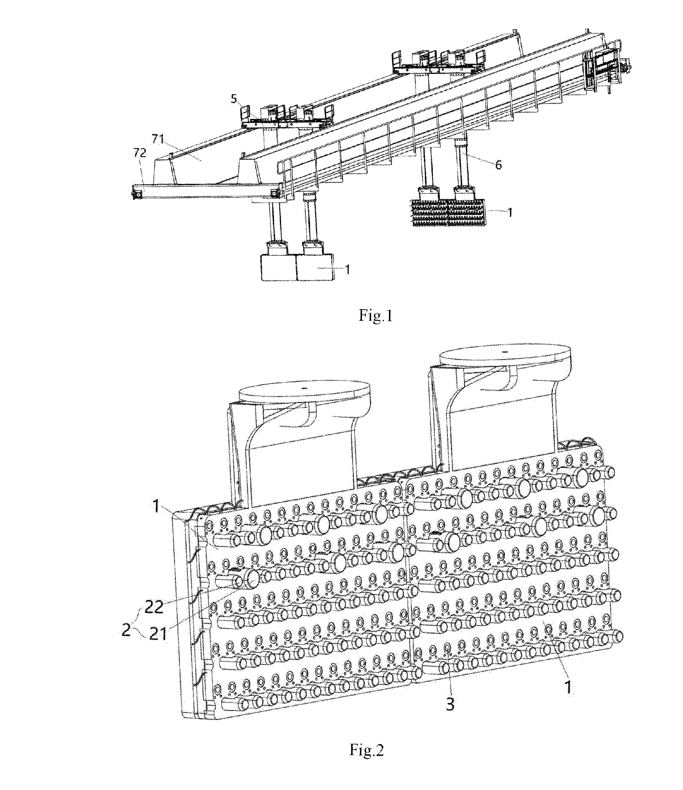

In one embodiment, referring to Figure 1 attached to the specification, a handling hanging claw assembly provided in this application is described. The handling hanging claw assembly provided in this application has a good fit, and is not easy to be limited by the shape or outline of the item when handling the item, and the design of the handling jaw is very ingenious, avoiding the gravity of the item concentrated in a certain area resulting in the fatigue fracture of the hanging claw.

Referring to Figure 1 and 2 of the description, the application provides a handling hanging claw assembly, comprising a plurality of hanging claw main bodies 1, which are connected with the corresponding movable end, and a plurality of hanging claw main bodies 1 can move with the movable end, so that the item to be transported is limited between the corresponding hanging claw main bodies 1; Each hanging claw main body is floatingly provided with a plurality of floating claws 2, and a resetting structure is arranged between the floating claws 2 and the hanging claw main body 1 for providing resilience;

In the first state, the hanging claw main bodies 1 distributed on both sides of the item to be transported is moved in the first direction closer to the item to be transported, so that part of the floating claws 2 are displaced by the pressure of the item to be transported in the first direction of the movement, and the remaining floating claws 2 form an enclosure partially on the side wall of the item to be transported, so as to limit the displacement of the item to be transported, and is used for grabbing the item to be transported;

In the second state, the hanging claw main bodies 1 distributed on both sides of the item to be transported is moved away from the item to be transported in the second direction, so that part of the floating claws 2 rebound in the second direction of movement and return to the initial state, so that the hanging claw main body 1 is relieved of the restriction relative to the item to be transported and is used to release the item to be transported.

It should be noted that the floating claw 2 set here has good compatibility for the items to be transported, when grasping the items to be transported, the hanging claw main bodies 1 clamp both sides of the items to be transported, the floating claws 2 will retract under pressure, and the other floating claws 2 will enclose the side wall of the items to be transported. In this case, it does not matter whether there is a gap for the items to be transported. The hanging claw main body 1 can grasp it, and through the enclosure to ensure the fixed stability, while ensuring that the handling of the hanging claw assembly and the items to be transported are not easily worn or damaged.

Wherein, the operator can set the number of hanging claw main body 1 according to the number and size of the item to be transported and other factors, so that a plurality of hanging claw main bodies 1 can work simultaneously to achieve more efficient handling efficiency, so as to realize the handling of multiple items at one time.

It should also be noted that the first direction of motion and the second direction of motion can be understood as when the item to be transported is pressed by the floating claw 2 in the first state, the floating claw 2 will move to the direction of pressure, and can also be understood to be retracted into the hanging claw main body 1 under the action of pressure, then the direction of movement is the first direction of motion; On the contrary, when the item to be transported needs to be put down in the second state, the hanging claw main body 1 will be far away from the item to be transported, and the floating claw 2 will rebound in this process, and it can also be understood that after not being compressed, the floating claw 2 that retracts into the hanging claw main body 1 extends out again, then the direction of movement is the second direction of motion.

In one embodiment, referring to Figure 2 attached to the specification, a plurality of floating claws 2 includes a plurality of first floating claws 21 and a plurality of second floating claws 22, and the cross-sectional area of the first floating claw 21 is greater than the cross-sectional area of the second floating claw 22.

It is understandable that the first floating claw 21 and the second floating claw 22 here are differentiated into large size and small size, and different sizes can correspond to match different types or outlines of the items to be transported, with more pertinent, so that in the process of grabbing, the floating claw 2 is more fit to the outline of the items to be transported, making the enclosure tighter. But in other embodiments, the first floating claw 21 and the second floating claw 22 can also be arranged to be the same size or shape.

Moreover, the position of the first floating claw 21 and the second floating claw 22 and the arrangement between each other can be set according to the specific situation, and can be evenly distributed or distributed in a specific position.

In one embodiment, a plurality of first floating claws 21 and a plurality of second floating claws 22 are configured as cylinders, and the end faces of the cylinders are flush when the item to be transported does not exert pressure on the floating claws 2.

Here, since the outline of the cylinder is relatively smooth and continuous, it is not easy to cause scratches and friction to the items to be transported, thus ensuring the integrity of the appearance of the items to be transported.

In some other embodiments, the end faces of the cylinders may also be arranged in a non-flush form to accommodate the outlines of different items to be transported; In addition, the outline shape of the first floating claw 21 and the second floating claw 22 can also be not a circle, and can be set according to the specific situation, and the cross section can be an ellipse or a triangle or a square or even a polygon.

In another embodiment, a magnetic generating device is also arranged, and a plurality of hanging claw main bodies 1 are electrically connected with magnetic generating devices, wherein at least part of the item to be transported is made of metal, when the magnetic generating device is started, the floating claw generates 2 an attractive force relative to the item to be transported and is used to retain and secure the item to be transported.

It should be noted that the magnetic generating device can improve the retention and securing effect of the hanging claw main body 1 for the items to be transported, which can improve the grasping ability of the hanging claw assembly for the metal items to be transported, and ensure the stability of the grasping and handling process.

However, if the item to be transported is not metal itself and cannot be attracted by the magnetic generating device, some attractive magnetic parts, such as iron blocks or iron sheets, can be secured on its surface before transportation, so that through subsequent operations can also make the item to be transported retained in the hanging claw main body 1, improving the reliability and safety of the handling process.

In one embodiment, based on the above embodiment, the magnetic generating device is a controllable electromagnet 3, and a fixed groove is arranged on one side of the hanging claw main body 1 having the floating claw 2, and the controllable electromagnet is arranged in the fixed groove and is used for generating a magnetic force to attract the item to be transported.

It is understandable that the operator can adjust the retention force of the floating claw 2 by controlling the magnetic output of the controllable electromagnet 3, and When the outline of the item to be transported changes, the magnetic force output can be adjusted according to the retention surface, so that the cooperation between the item to be transported and the hanging claw main body 1 is more close.

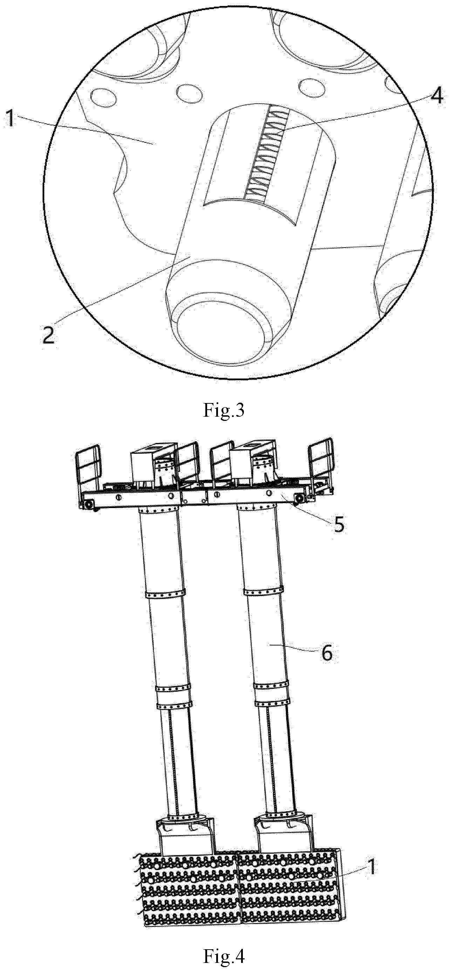

In one embodiment, referring to FIG.3 of the specification, the resetting structure comprises a spring 4, a first accommodating groove arranged on the inner circumference of the floating claw 2, and a second accommodating groove arranged on the hanging claw main body 1, and the spring 4 is simultaneously arranged in the first accommodating groove and the second accommodating groove to be connected with the floating claw 2 and the hanging claw main body 1 respectively, and the depth of the second accommodating groove is not less than the length of the floating claw 2, so that the floating claw 2 can completely enter the second accommodating groove.

Wherein, the telescopic effect of the floating claw is achieved through the spring 4 set and the accommodating groove matching with the spring 4. When grasping the items to be transported, part of the floating claws 2 are compressed and retracted, so that the rest of floating claws 2 can realize the enclosure for the items to be transported and achieve the effect of fixed limit. When putting down the items to be transported, the hanging claw main body 1 is far away from the items to be transported, so that the pressure on the floating claw 2 is gradually reduced, then spring 4 can also gradually rebound and make the floating claw 2 to extend.

It should be noted that the depth of the second accommodating groove is not less than the length of the floating claw 2 so that when the item to be transported is pressed down on part of the floating claw 2, part of the floating claw 2 can be retracted to the greatest extent, then the side wall of the item to be transported is directly against the surface of the hanging claw main body 1, and the enclosing area that the rest of the floating claws 2 relative to the item to be transported is also the largest, to ensure the stability of the handling. Of course, in some implementation cases, the relative parameters of the two can also be adjusted without affecting the technical effect.

In other embodiments, the first accommodating groove arranged in the inner circumference of the floating claw 2 can also be cancelled, one end of the spring 4 is directly arranged at the bottom of the floating claw 2, or it is fixed on the periphery of a part of the floating claw 2, and the other end is fixed in the second accommodating groove, and the telescopic effect can also be obtained; Or directly arrange the floating claw 2 into a retractable telescopic structure, and set the inside of the telescopic structure to be hollow, so that the two ends of the spring 4 are connected with the telescopic structure and the hanging claw main body 1.

In one embodiment, referring to FIG. 1 attached to the specification, according to another aspect of the present application, the present application further provides a pipeline handling equipment, comprising: the above-mentioned a kind of handling hanging claw assembly and a base frame, wherein the movable end is configured as a movable vehicle group, and the movable vehicle group is used to drive the main body of hanging claw 1 to move transversely or longitudinally; the base frame is used to provide support for the movable vehicle group.

It should be noted that multiple pipelines can be transported at the same time through a number of symmetrically arranged hanging claw main bodies 1, avoiding the situation that some pipeline handling equipment can only move one pipeline at a time, improving work efficiency, and at the same time, the pipeline is driven by the moving vehicle set to move, so that the pipeline can quickly and safely reach the designated location.

In one embodiment, referring to FIG.4 attached to the specification, movable vehicle group comprises a trolley 5 and a telescopic arm 6 connected with the trolley 5, and the other end of the telescopic arm 6 is fixed connected with the hanging claw main body 1; the wheel of the trolley 5 is connected with the base frame so that the trolley 5 can move along the longitudinal direction of the base frame; the bottom of the base frame is provided with an opening to make the telescopic arm 6 pass through the opening, and drive the hanging claw main body 1 to move in the extension or contraction direction of the telescopic arm 6, so as to adjust the position of the pipeline.

It is worth mentioning that the trolley 5 and the telescopic arm 6 can be used together to achieve the transverse and longitudinal displacement of the transported pipeline, and when grasping the pipeline, it can also achieve a more accurate grasp of the pipeline by adjusting the position of the trolley 5 and the length of the telescopic arm 6, ensuring the overall reliability.

In addition, the telescopic arm 6 can be rotatably connected to the trolley 5, so that the handling hanging claw assembly can be steered to cooperate with the pipeline or the placing place when grabbing or putting down the pipeline; Wherein the operator can control the movement of telescopic arm 6 and trolley 5 in time through remote terminal, so that the whole handling process is very smooth, and the degree of automation is improved.

In another embodiment, referring to Figure 1 attached to the specification, the number of the hanging claw main bodies 1 is four, and the four hanging claw main bodies 1 are symmetrically arranged in pairs, and the four hanging claw main bodies 1 are correspondingly arranged with four trolleys 5, and the adjacent trolleys 5 are detachable connection so that the trolleys 5 can be used independently or in combination.

It is understandable that the increase in the number of the hanging claw main body 1 can make the grasping area of the floating claw 2 for pipelines increase, then the pipeline handling equipment can transport more quantities of pipelines at the same time to achieve the high-efficiency handling work, the working time is saved. For example, the four trolleys 5 shown in the figure are arranged opposite to each other in pairs, so that the four hanging claw main bodies 1 can simultaneously transport the pipeline.

Moreover, the detachable connection between the trolley 5 can make the handling operation more flexible, and the state of the handling hanging claw assembly needs to be adjusted can have a timely response. For example, when handling a plurality of pipelines, but when the length of the pipeline is inconsistent, each trolley 5 can be made to run independently, so as to ensure that each pipeline is fixed in place; When the length of the pipeline is basically the same, the trolley 5 can be combined, and a plurality of hanging claw main bodies 1 can be combined into a hanging claw body, so that the coherence and integrity of the assembly is very good; In addition, there are a variety of embodiments to realize detachable connection, and adjacent trolley 5 can be connected by bolt using fixed plates, or a clamping structure is arranged on the side wall of trolley 5, such as the cooperation of clamping end and clamping groove, and here is not an example.

It is understandable that, according to the size of the base frame and the number of pipes that need to be transported at one time, the number of the hanging claw main body 1 can be increased or decreased accordingly, and these quantitative changes do not deviate from the concept of this application.

In one embodiment, the base frame is configured as a gantry crane, and the movable vehicle group is matched with the main beam 71 of the gantry crane so that the movable vehicle group moves transversely along the longitudinal direction of the main beam 71.

The gantry crane here can provide excellent support for the handling hanging claw assembly, and can be used in indoor factories or in open-air cargo yards, etc., with strong compatibility, and the gantry crane can provide a traveling platform for the movable vehicle group, so that the pipeline handling is more flexible.

Of course, it is understandable that, in some embodiments, the base frame may not adopt a gantry crane, only need to be similar to the mechanism of the gantry crane, comprising the main beam 71 that can be used for movable vehicle group travel, the end beam 72 that is fixedly connected to the main beam 71, and the structure that supports the main beam 71, and the structure supporting the main beam 71 can be a support column fixed in the cement ground or a wire rope hanging the main beam 71 and the end beam 72 in the air of the workshop, etc., which is not described here.

The above are only the best embodiments of this application and the technical principles used, and can be subject to various obvious changes, readjustments and substitutions without deviating from this application. Persons skilled in the art can easily understand the other advantages and effects of this application from the contents disclosed in this specification. This application may also be implemented or applied in different ways, and the details in this specification may also be modified or changed based on different points of view and applications without deviating from the spirit of this application. In the case of non-conflict, the above embodiments and the features in the embodiments may be combined with each other.

## Claims

1. A handling hanging claw assembly, comprising a plurality of hanging claw main bodies, which are connected with corresponding movable ends, and the plurality of hanging claw main bodies are movable with the movable ends, so that an item to be transported is restricted between the corresponding hanging claw main bodies;
each hanging claw main body is floatingly provided with a plurality of floating claws, and a resetting structure is arranged between the floating claws and the hanging claw main body for providing resilience;
wherein in a first state, the hanging claw main bodies distributed on both sides of the item to be transported is moved in a first direction towards the item to be transported, so that part of the floating claws are displaced by a pressure of the item to be transported in the first direction of movement, and the remaining floating claws form an enclosure partially on a side wall of the item to be transported, so as to limit the displacement of the item to be transported, and is arranged to grab the item to be transported;
wherein in a second state, the hanging claw main bodies distributed on both sides of the item to be transported is moved away from of the item to be transported in a second direction, so that part of the floating claws rebound in the second direction of movement and return to the initial state, so that the hanging claw main bodies are relieved of the restriction relative to the item to be transported and is used to release the item to be transported.

2. The handling hanging claw assembly according to claim 1, wherein the plurality of the floating claws includes a plurality of first floating claws and a plurality of second floating claws, and a cross-sectional area of the first floating claw is greater than a cross-sectional area of the second floating claw.

3. The handling hanging claw assembly according to claim 2, wherein the plurality of the first floating claws and the plurality of the second floating claws are configured as cylinders, and end faces of the cylinders are flush when the item to be transported does not exert pressure on the floating claws.

4. The handling hanging claw assembly according to any one of claims 1 to 3, wherein a magnetic generating device is also arranged, and the plurality of the hanging claw main bodies are electrically connected with the magnetic generating devices, wherein at least part of the item to be transported is made of metal, wherein when the magnetic generating device is started, the floating claw generates an attractive force relative to the item to be transported and is used to retain and secure the item to be transported.

5. The handling hanging claw assembly according to claim 4, wherein the magnetic generating device is a controllable electromagnet, and a fixed groove is arranged on one side of the hanging claw main body having the floating claw, and the controllable electromagnet is arranged in the fixed groove and is used for generating a magnetic force to attract the item to be transported.

6. The handling hanging claw assembly according to any one of claims 1 to 5, wherein the resetting structure comprises a spring, a first accommodating groove arranged on an inner circumference of the floating claw, and a second accommodating groove arranged on the hanging claw main body, and the spring is simultaneously arranged in the first accommodating groove and the second accommodating groove to be connected with the floating claw and the hanging claw main body respectively, and a depth of the second accommodating groove is not less than a length of the floating claw, so that the floating claw can completely enter the second accommodating groove.

7. A pipeline handling equipment, comprising:
the handling hanging claw assembly according to any one of claims 1 to 6, wherein the movable end is configured as a movable vehicle group, and the movable vehicle group is used to drive the hanging claw main body to move transversely or longitudinally; and
a base frame, wherein the base frame is used to provide support for the movable vehicle group.

8. The pipeline handling equipment according to claim 7, wherein the movable vehicle group comprises a trolley and a telescopic arm connected with the trolley, and another end of the telescopic arm is fixedly connected with the hanging claw main body; a wheel of the trolley is connected with the base frame so that the trolley can move along a longitudinal direction of the base frame; a bottom of the base frame is provided with an opening to make the telescopic arm pass through the opening, and drive the hanging claw main body to move in an extension or contraction direction of the telescopic arm, for adjusting the position of the pipeline.

9. The pipeline handling equipment according to claim 8, wherein the number of the hanging claw main bodies is four, and the four hanging claw main bodies are symmetrically arranged in pairs, and the four hanging claw main bodies are correspondingly arranged with four trolleys, and the adjacent trolleys have detachable connection so that the trolleys can be used independently or in combination.

10. The pipeline handling equipment according to any one of claims 7 to 9, wherein the base frame is configured as a gantry crane, and the movable vehicle group is arranged to co-operate with a main beam of the gantry crane so that the movable vehicle group moves laterally along the longitudinal direction of the main beam.
